# EUROPEAN PATENT APPLICATION

(11) **EP 2 208 605 A1**
(43) Date of publication of application: **21.07.2010**
(21) Application number: 10158868.9
(22) Date of filing: 30.07.2004
(51) Int. Cl.: B29C 47/94

(54) **Method of Lubricating a Particulate Material**

(30) Priority: 01.08.2003 GB 0318038
(62) Divisional of application: 09075241.1
(71) Applicant: Reckitt-Benckiser (UK) Limited, 103-105 Bath Road Slough Berkshire SL1 3UH (GB)
(72) Inventor: Cook, Stephen Kenneth, Newbury, RG14 2NT (GB); Duffield, Paul John, Newbury, RG14 2NT (GB); Lawrence, Kerry Anne, Barton upon Humber, DN18 5FJ (GB); Smith, Carl Richard, Newbury, RG14 2NT (GB)
(74) Representative: Bowers, Craig Malcolm

(57) **Abstract**

A method of making cleaning or water-softening tablets involves making a premix of cleaning or water-softening particulates and a lubricant, for example a sucrose ester or sorbitan ester; feeding the premix into a feed port of an extruder; feeding a binder, for example polyethylene glycol, into the extruder at or downstream of the feed port, the binder being a solid at room temperature but being mixed with the cleaning or water-softening particles as a liquid or becoming a liquid inside the extruder; and extruding the resulting mixture into strands which are separated into tablets.

## Description

This invention relates to a method of making a cleaning composition tablet or a water-softening tablet, and to such a tablet itself.

The current, conventional, method of making cleaning tablets is by compressing the cleaning components in particulate form. The particulates are fed into the cavities of, for example, a rotary compression apparatus, which compresses them into a self-supporting form. This could be the final tablet, but consumers have come to expect tablets to have two or more distinct layers and/or a separate insert, for example a so-called "pill". To produce a tablet with multiple layers further steps of supplying cleaning particulates and effecting compression are undertaken, layer by layer. This can lead to over-compression of the base layer, which can in turn lead to retarded dissolution, in use. When an insert is introduced this is typically done by forming a cavity in the upper face of the tablet, and setting the insert into the cavity, for example by means of an adhesive. This introduces the need for an entirely different type of manufacturing step, with its own equipment. Furthermore the formation of the cavity and/or the introduction of the insert may cause over-compression in the base region of the tablet, under the pill.

It will be appreciated that nowadays enormous numbers of cleaning tablets are manufactured. Whilst big improvements in manufacturing efficiency have taken place, the formation of cleaning composition tablets in individual moulds is not *prima facie* a very efficient starting point. However no other method has gained widespread acceptance and so the individual compression method remains the method of choice.

One attempt to provide an extrusion process for the manufacture of cleaning tablets is described in EP-A-814152. In the process of this patent application a premix of cleaning particulates, also containing a plasticiser and a lubricant, is pressed through perforated dyes at pressures between 25 and 200 bar (2.5-20 MPa). The pressure is 120 bar (12 MPa) in the single example. Immediately after emerging from the perforated dye the strand is cut to the pre-determined size of cleaning composition granules by means of a cutting device, prior to being pressed into tablets. In between cutting the pressing the chopped strand portions may undergo a rounding step.

It will be appreciated that the method described in EP-A-814152 is a hybrid one. This extrusion is simply a way of making particles which, it is suggested, are good feedstock materials for the later pressing step.

WO 01/02532, in describing its own state of the art, mentions a prior method which involves plasticising a premix under high pressure and extruding it through holes, after which it is formed by cutting. This is said to employ an extrusion pressure of 100 bar (10 MPa) and to produce compact particles or pieces, of reduced internal hollow volume.

WO 01/02532 goes on to describe its own invention as being the formation of cleaning tablets by use of a pair of counter-rotating rollers to pull a shapeable material towards an outlet opening, the resulting strand being separated into the individual tablets. A much lower pressure is used, less than 40 bar (4 MPa). Preferred pressures are lower still. For example preferred pressures of under 10 bar (1 MPa) and under 5 bar (0.5 MPa) are mentioned. In this method it is stated that the exiting strands are cut and allowed to harden.

As a general comment it may be stated that the practicalities of such methods are discouraging. Cleaning particulates are in the main hard, crystalline, abrasive materials. Extrusion is a widely used process for the formation of strands from material whose mechanical behaviour is described by the term "plastic" - including polymeric materials, ductile metals and pasty materials - but not for hard particulates. When we attempted in experimental work to effect extrusion of such materials at the low pressures recommended by WO 01/02532 - in fact in the range 8-14 bar (0.8-1.4 MPa) - the results were poor. On the other hand higher pressures - somewhat against the teaching of WO 01/02532, being outside the favoured range - would introduce an enhanced risk of abrasive wear of extruder parts.

It is an object of the present invention to devise an improved method of making a cleaning tablet.

It is a further object of the present invention to devise an improved method of making a water-softening tablet.

In accordance with a first aspect of the present invention there is provided a method of making tablets of a cleaning composition or of a water-softening composition or tablet precursors therefor, wherein:
a premix is made of cleaning or water-softening composition particulates and a lubricant;
the premix is fed into a feed port of an extruder; and
the resulting mixture is extruded;
wherein the extrusion is of one or more strands which are separated into tablets or scored into tablet precursors, shortly after their extrusion, either as-extruded or after post-extrusion enhancement.

Cleaning composition particulates are also called cleaning particulates herein; there is no difference in meaning. Likewise cleaning composition tablets or precursors are also called cleaning tablets or precursors herein; water-softening composition particulates are also called water-softening particulates herein; and water-softening composition tablets or precursors are also called water-softening tablets or precursors herein.

In accordance with the first aspect of the invention the extrusion pressure is not defined. It can be whatever is required to carry out the method in an efficient manner. Suitably it is in excess of 0.3 MPa, preferably in excess of 0.5 MPa, and more preferably is in excess of 0.8 MPa. More preferably still it is in excess of 1.2 MPa. Yet more preferably the pressure is in excess of 2 MPa. Most preferably (and also in accordance with the first aspect) it is in excess of 4 MPa.

A premix may include a lubricant and a binder. A binder and lubricant can be added at the same time, including as a binder-lubricant mixture. Further, it is possible that one material may function both as binder and lubricant, in accordance with this invention. Preferably, however the binder is a component separate from the lubricant and is added separately. Preferably it is not part of the premix. Preferably it is fed into the extruder at or downstream of the feed port for the premix.

Preferably a binder is a solid at room temperature but is mixed with the cleaning or water-softening particulates as a liquid, or becomes a liquid inside the extruder.

In accordance with a second aspect of the present invention there is provided a method of making cleaning or water-softening composition tablets or tablet precursors therefor, wherein:
cleaning or water-softening composition particulates are fed into the feed port of an extruder;
a binder is mixed with the cleaning or water-softening composition particles, prior to, at the same time as or after the cleaning or water-softening composition particles are fed into the feed port, the binder being a solid at room temperature but being mixed with the cleaning or water-softening composition particles as a liquid or becoming a liquid inside the extruder;
the resulting mixture is extruded at a pressure in excess of 4 MPa; and
the extrusion is of one or more strands which are separated into tablets or scored into tablet precursors, shortly after their extrusion, either as-extruded or after post-extrusion enhancement.

In the second aspect a premix may be made of cleaning or water-softening particulates and the binder. The resulting premix may be fed into a feed port of an extruder. However, it is preferred that the binder is not part of a premix. It is preferred that the binder is fed into the extruder at or preferably downstream of the feed port through which the premix enters the extruder.

In accordance with a third aspect of the present invention there is provided a method of making tablets of a cleaning composition or of a water-softening composition, or of a tablet precursor therefor, wherein:
a premix is made of cleaning or water-softening composition particulates and a lubricant;
the premix is fed into a feed port of an extruder;
a binder is fed into the extruder at or downstream of the feed port, the binder being a solid at room temperature but being mixed with the cleaning or water-softening composition particles as a liquid or becoming a liquid inside the extruder;
the resulting mixture is extruded at a pressure in excess of 4 MPa; and
the extrusion is of one or more strands which are separated into tablets or scored into tablet precursors, shortly after their extrusion, either as-extruded or after post-extrusion enhancement.

In the second aspect it is preferred that a premix is made of cleaning or washing-softening particles and a lubricant. The premix may be fed into a feed port of the extruder. It is preferred that the binder is not part of this premix. It is preferred that a binder is fed into the extruder at or preferably downstream of the feed port for the premix.

In all aspects of the invention the extrusion pressure preferably does not exceed 14 MPa, preferably 12 MPa, and more preferably 10 MPa. Still more preferably it does not exceed 6 MPa.

It is believed that the aspects of the invention defined above set out two important features which distinguish the invention from earlier attempts to use extrusion in the manufacture of cleaning or water-softening tablets, these features being of importance in achieving excellent results in our experimental work. These are, firstly, the mixing of a liquid lubricant into the cleaning or water-softening particulates as a premix (i.e. before feeding it into the extruder), with a binder only being introduced later, by injection into the extruder downstream of the feed port; and, secondly, effecting extrusion under a pressure in excess of 4 MPa.

In accordance with a fourth aspect of the present invention there is provided a method of making cleaning or water-softening composition tablets or tablet precursors wherein a pasty or plastic cleaning or water-softening composition is advanced in an intermeshing twin screw extruder, preferably configured for low shear advancement of the composition and extruded as a strand which is separated into tablets or scored into tablet precursors, shortly after their extrusion, either as-extruded or after post-extrusion enhancement.

A low shear configuration of the extruder may be achieved by using low shear elements on the extruder screws and by providing only a small amount of overlap between the screws (a large amount of overlap means narrow spaces between screws, which in turn means high shear forces. Alternatively or additionally a low shear configuration may be achieved by using transport screws, suitably having an even pitch and predominantly forward pitch. Preferably a low shear configuration in this invention means there are no or only insubstantial reverse screw portions and/or no or only an insubstantial mixing zone, in each case preferably shortly downstream of a position where a binder is added to the extruder (if added separately). Preferably the barrel extruder length is short, preferably not more than 75 cm, to minimise shear forces.

In accordance with a fifth aspect of the present invention there is provided a method of making cleaning or water-softening composition tablets, or tablet precursors therefor, wherein a pasty or plastic cleaning water-softening composition is advanced in a forming extruder (also called a paste extruder) and extruded as a strand which is separated into tablets or scored into tablet precursors, shortly after their extrusion, either as-extruded or after post-extrusion enhancement.

A forming (or paste) extruder may be, for example, a single screw extruder in an oversized barrel, or (preferably) a twin screw extruder in which the screws do not overlap, or a twin screw extruder in which there is one screw and one "blank", for example a cylindrical body instead of a second screw. Shear forces are thereby low.

A twin-screw extruder may be used in any aspect of the invention, preferably configured for low shear operation.

In a twin screw extruder of any aspect of the present invention, the screws preferably counter-rotate.

In the fourth or fifth aspects the composition may include a lubricant as defined in relation to the first, second or third aspect herein. It may be added in a manner and in an amount as defined in relation to the first, second or third aspect herein.

In the fourth and fifth aspects the composition may include a binder as defined in relation to the first, second or third aspect herein. It may be added in a manner and in an amount as defined in relation to the first, second or third aspect herein.

In the fourth and fifth or further aspects the extrusion pressure may be a defined above with respect to the first, second or third aspect herein.

An extruder as defined in the fourth or fifth aspect may be used in the first, second, or third aspects, or in further aspects.

The definitions of preferred aspects of the present invention which will now be given apply to each of the aspects defined above, and to further aspects.

In each of the aspects of the present invention the one (or more) strands are separated into tablets, or partially separated, shortly after their extrusion. If partially separated (for example formed with score lines) they may later be separated, for example by the consumer breaking them apart. Thus, no aspects of the invention involve the separation of the one or more strands into small pieces which are then rounded, and compacted with other pieces, into a cleaning or water-softening tablet.

It is also stated in each aspect of the present invention that the one or more strands are separated into tablets shortly after their extrusion, as-extruded or after post-extrusion enhancement. In experimental work we have found that simply by extruding and cutting, tablets of good quality are obtained, having an outer skin or shell of smooth or glassy appearance, and a core which, when the tablets are broken into two pieces, has the appearance of a consolidated particulate material. This is a good structure because the tablet's external appearance is of a type which has consumer acceptance, and may be low dusting, pleasant to handle and "finished-looking", whereas the granularity of the core may aid good break-up and dissolution in wash water.

Cutting is preferably effected by a sliding cut, for example by a sliding cut, preferably by a reciprocating or rotating knife. The cutting tool may have teeth, so as to effect a saw cut. An alternative cutting method is a straight down "push-cut" e.g. guillotining. Cutting may take place when strands have cooled to ambient temperature (which may be naturally or by blowing ambient air or by use of cooled air) or when they are in an intermediate state between extrusion and ambient temperature, between "just extruded" (normally somewhat pasty and so with a risk of smearing and/or deforming), and fully set/cooled (normally somewhat rigid and so with a risk of crushing and/or crumbling). Preferably cutting is carried out from 1 minute to 20 minutes after extrusion, preferably from 2 to 10 minutes.

As noted above, consumers often expect cleaning tablets of this type to have visually distinct zones, for example achieved by having different layers, inserts or the like. To a certain extent such effects can be achieved through the extrusion process itself, but other effects may be achieved by steps taken between extrusion and separation into tablets. Examples of ways in which a tablet may be made, in accordance with the present invention, yet with zones of different properties, will now be described.

In one simple example there may be co-extrusion, side-by-side extruders extruding strands of different materials (preferably two, three or more). The two or more strands may be brought together during or shortly after their extrusion to form a consolidated strand of two or more-layer or side-by-side form. Preferably, however, a tablet of the present invention is extruded through a single die.

Multiphase extrusion, though not excluded, is not preferred in this invention. It is considered preferable to effect any enhancement which is required by a post-extrusion step or steps, for example to give two or more zones.

Another way in which two zones can be achieved is by post-extrusion enhancement of a strand or strands.

One way in which post-extrusion enhancement could be carried out is by laying a separately-formed insert body onto or into a surface, typically an upper surface, of a strand. Typically the strand will be able to keep its own shape yet will be somewhat soft when it comes out of the extruder. An insert body, which could be a strip, could be pressed against or somewhat into the strand. Furthermore if the insert body were thinner than the strand, so that the strand had either one or two lateral "wings" extending beyond the insert body, the or each wing could be folded over the insert body in order to form an envelope structure (like a sausage roll).

Another way of effecting post-extrusion enhancement is to deposit a "pill" on a strand, at intervals. The strand advance rate would be constant. The pill deposit rate can be made constant, and the line can be set up so that tablets are separated in the regions between adjoining pills.

Another way of effecting post-extrusion enhancement is by partially or wholly coating the or each strand with a settable liquid composition. The coating could be partial, for example of an upper or lower region only, or it could be complete. The selection may depend on the aesthetics required and/or whether the coating delivers active cleaning components, and if so in what amounts such components are required.

Another possibility for post-extrusion enhancement is to take two or more strands, preferably from separate extruders, and twist them about each other or, preferably, to plait them.

In another embodiment strands could be twisted individually before being pressed together, at a time when they are firm enough to be pressed together without their twisted shape being flattened, yet still with some plasticity, to enable them to stay together.

It will be appreciated that using an extrusion method it is easy to produce tablets which have a through-bore. Into such a through-bore, a second material could be inserted. In fact, this could be by post-extrusion enhancement, of the type mentioned above, shortly after extrusion, or by a later insertion of the material. Alternatively such a cavity could be left open. This could be for aesthetic reasons, but the provision of such a cavity, though which the wash water can easily flow, may be expected to improve the tablet's dissolution rate.

In another embodiment a strand could be cut and each cut part formed into a shape, for example rolled in a ballformer, of the type used in the confectionery industry. With suitable texturing and/or colouring the tablet could be made to denote a different article, for example a fruit, e.g. an orange or lemon, a football or a bottle, or any other shape having an axis of symmetry about which the article may be turned, without yielding any visible change of orientation. Ball forming could be applied to solid strands and to hollow strands.

There are certain materials which may prove to be difficult to extrude because of their degradation under typical extrusion conditions. Examples might be expected to include oxygen bleaching compounds, and enzymes. It will be appreciated that post-extrusion enhancement which involves the addition of a separate material to the extruded strand or strands, offers a way of incorporating such compounds, without risking their degradation. Even if extrusion is effected at an elevated temperature which a particular material may not tolerate, the temperature of any strand will fall quickly, such that a temperature sensitive compound may soon be added. With the method described herein there is not thought to be any difficulty in the retention of efficacy of oxygen bleaches or enzymes, when incorporated into extruded strands, in the manner described.

Preferably the or each strand issues from the extruder in a self-supporting but plastic condition. At this point it may be manipulated into other shapes.

Preferably the strand which issues from the extruder hardens over a sufficient time span to allow for any post-extrusion enhancement which is required to take place, and the separation into tablets. Typically the strand material changes from being plastic to non-plastic. The interval for this change is preferably less than 12 minutes, preferably less than 8 minutes, under ambient, still conditions. The interval may be substantially shorter under assisted cooling conditions, such as provision of a draught and/or cooled air, for example in a cooling tunnel.

For the purposes of this definition we regard the transition from plastic to non-plastic as taking place when a strand portion 30 cm in length subjected to bending between a person's hands fails in fracture, rather than bends.

Preferably the temperature of the material within the extruder does not exceed 95°C, preferably 85°C, at any time. More preferably it does not exceed 80°C. Still more preferably it does not exceed 75°C. Most preferably it does not exceed 70°C. However, it is desired that the temperature of the material exceeds the ambient air temperature. Preferably the temperature of material within the extruder is at least 40°C, more preferably at least 45°C, and most preferably at least 50°C.

Once the or each strand has issued from the extruder it may be permitted to cool under ambient conditions. Alternatively cooling may be assisted. One way in which this may be done is by employing a cooled metal belt onto which the or each strand issues. Another way in which this may be done is by using a cooled fluid, preferably cooled air, downstream of the extruder. Another way is by blowing a fluid, preferably air, across the or each strand. One or more of these methods may be used. In one embodiment all of these methods are used together, in that cooled air is blown across the or each strand immediately downstream of the extruder, and the or each strand advances onto a cooled metal conveyor belt.

Preferably the or each strand is separated into tablets, during the manufacture.

Although the tablets are preferably separated by cutting, other separation methods, for example twisting, are not ruled out. A method may be envisaged whereby the strand is twisted at intervals when still plastic, to form "sausages", which can be separated by breaking the connections, once they have become more brittle. Partial cutting or pressing or nipping or perforating (all such methods collectively called "scoring" herein) to form frangible separation webs, may also be employed, to form tablet precursors. Separation of the precursors to produce tablets may be effected during manufacture or by the consumer, manageable lengths being provided from which the consumer breaks or twists off tablets as required. A tablet precursor may be, for example, a straight row of tablets, to be broken off as needed.

Preferably strands are separated or scored from one side of the strands to the other, suitably transversely to their length, and preferably substantially perpendicularly to their length.

The tablets may be like a box in shape and proportion. However they may also be cylindrical. Such shapes are suitable when the tablets are intended to be consumed in one cleaning operation.

The tablets may alternatively be intended to last through several washes of a ware-washing machine, preferably at least three washes; and preferably up to eight washes, especially up to eight washes. Such tablets may suitably be in the form of a stick or rail in shape.

Preferably the tablets weigh at least 10g, and more preferably at least 15g.

Preferably the tablets weigh up to 60g, more preferably not more than 45g, most preferably not more than 40g. However if the tablets are in the form of a stick or rail, which is intended to last through several washes of a ware-washing machine, they may weigh up to 300g, preferably up to 150g.

Preferably the volume of each tablet is at least 8 cm³, more preferably at least 12 cm³.

Preferably the volume of each tablet does not exceed 40 cm³, and more preferably does not exceed 35 cm³. However in the case of tablets intended to last through several washes of a ware-washing machine, for example tablets in the form of a stick or rail, they may have a larger volume. The volume of such tablets may suitably be up to 250cm³, preferably up to 120cm³.

The definitions of weight and volume given above refer to a final tablet, as-extruded or after post-extrusion enhancement, as applicable. If the post-extrusion enhancement adds weight, the values include the weight of the additional material.

The lubricant is or may be used in the premix to aid the flow of material into the extruder. A preferred lubricant is a liquid. In principle many materials are suitable as a liquid lubricant. One preferred class of materials is sucrose esters. Preferably the ester moiety thereof has 8 to 24 carbon atoms, more preferably 12 to 22. Preferably the ester moiety is linear. Preferably the ester moiety is aliphatic. Preferably it is saturated or has one double bond. The compound may be alkoxylated (preferably ethoxylated) but preferably is not. Examples include sucrose esters, for example selected from sucrose palmitate, sucrose laurate and sucrose oleate. Other suitable materials include sorbitan esters, for example selected from sorbitan oleate and sorbitan laurate. Preferably the ester moiety thereof has 8 to 24 carbon atoms, more preferably 10 to 20. Preferably the ester moiety is linear. Preferably the ester moiety is aliphatic. Preferably it is saturated or has one double bond. They may be alkoxylated (preferably ethoxylated) but preferably are not. Especially preferred are sorbitan monooleates, whether alkoxylated (preferably ethoxylated) or non-alkoxylated. Particularly good results have been obtained using a combination of non-ethoxylated sorbitan mono-oleate and ethoxylated sorbitan tri-oleate. Other promising lubricants include adducts of low molecular weight polyalkylene glycols and fatty acid esters, for example PEG 600 mono-oleate, and PEG 600 mono-laurate

Certain materials useful as lubricants also have beneficial detergency properties. These include sorbitan esters and sucrose esters.

Preferably when a lubricant is present, it is preferably present in an amount of at least 0.5% w/w, more preferably at least 1% w/w, and most preferably at least 1.5% w/w.

Preferably when a lubricant is present, it is preferably in an amount up to 4% w/w, more preferably up to 3% w/w, and most preferably up to 2.5% w/w. These amounts are based on the content of the lubricant compound(s) in the total weight of the material which is eventually extruded.

Preferably the lubricant is a liquid at room temperature (eg 20°C) so that no heating is effected, prior to its mixing with the cleaning composition powder components. However, the use of a lubricant which requires heating before addition to the premix is not excluded. Nor is use of a lubricant which provides lubrication in the solid state.

Suitably the lubricant is provided as an aqueous dispersion, emulsion or, preferably solution.

Sucrose esters have proved to be especially effective as lubricants. We are not aware of these compounds having been used as a lubricant for cleaning composition particles, or any other particles.

In accordance with a sixth aspect of the present invention there is provided the use of a lubricant for the purpose of aiding the flow of inorganic cleaning or water-softening particulates into an extruder which consolidates them into an extruded rope of cleaning or water-softening material.

In accordance with a seventh aspect of the present invention there is provided a method of lubricating a particulate material, the method comprising mixing a sucrose ester and/or a sorbitan ester with the particulate material. Preferred sucrose and sorbitan esters, optional alkoxylation, amounts used and physical form, are as stated above. A preferred particulate material is a cleaning or water-softening composition.

Preferably the premix is still a flowable powder after mixing with the lubricant. It may, however, have a slightly damp feel.

Preferably a binder is a material which is a solid at room temperature but which has a melting point at a moderate elevated temperature. Preferably the melting point is at least 30°C, and more preferably 40°C. Preferably the melting point does not exceed 70°C, and more preferably does not exceed 60°C. Such a binder fluidises the material in the extruder and helps it to advance, in the right physical condition to give a good-quality, consistent, extruded strand; yet, as the strand cools, it solidifies and helps to bind the material together.

By "room temperature" in this specification we mean 20°C.

Suitable materials for the binder are glycols, especially polyethylene glycol (PEG). Preferred is PEG having a molecular weight in the range 1000-10000, more preferably 1200-4000, and especially 1500-3000. One favoured grade of PEG is PEG 1500. This has a melting point of 47°C.

Preferably said binder is present in an amount of at least 2% w/w, preferably at least 3% w/w, preferably at least 4% w/w, more preferably at least 6% w/w, and most preferably at least 7% w/w. Preferably said binder is present in an amount of up to 18% w/w, more preferably up to 15% w/w, and most preferably up to 12% w/w. These amounts are based on content of the binder compound(s) in the total weight of the material which is extruded.

In accordance with an eighth aspect of the present invention there is provided a cleaning or water-softening composition tablet or tablet precursor made by a method in accordance with the first or second or third or fourth or fifth aspect defined above.

By the use of the term "cleaning composition" we mean a mixture of at least two or more ingredients selected from: surfactant, builder, filler, bleach (optionally containing also bleach activator and/or a bleach catalyst) and enzyme. The cleaning composition may contain other minor ingredients such as dye, fragrance and optical brighteners.

By use of the term "water-softening composition" we mean a mixture of a water-softening active(s) with other compounds selected from those mentioned in the previous paragraph, or elsewhere in this specification.

By the use of the term "particulate" we mean that feedstock for the premix contains a proportion of ingredients that are solid at 20°C and are in the form of particles. Preferably the particles are of no greater average size than 1500 µm, 1200 µm, 1000 µm, 800 µm and 700 µm. Preferred lower limits of average particle size are greater than 50 µm, 100 µm or 150 µm. In these definitions particle size is the d50 particle size (the median weight particle diameter, at which 50 wt% of the particles are greater than and 50 wt% of the particles are smaller than the d50 particle size).

Proportions of particulates present in the premix that are solid at 20°C are greater than 20%, 30%, 40%, 50% or 60% w/w; maximum levels are less than 95%, 90%, 75% and 60% w/w.

It is a surprising feature of the present invention that particulate materials, typically hard crystalline materials of high melting point, may be extruded efficiently, even with a small proportion of liquid and/or liquefied materials, without causing premature damage to the extrusion equipment.

Preferred proportions of particulate that remain in the solid state during the operating pressure and temperature of the extrusion machine are greater than 20%, 30%, 40%, 50% and 60% w/w, ideal maxima less than 95%, 85%, 75% and 65% w/w.

Cleaning or water-softening tablets herein in granular form typically limit water content, for example to less than 7% free water, for better storage stability.

Examples of cleaning particulates that remain in a solid state during the operating pressure and temperature of the extrusion machine are materials that undergo brittle fracture under compression. Examples include inorganic compounds such as zeolites, silicates, phosphates, carbonates and bicarbonates (sometimes called builders when used in washing compositions).

Examples of water-softening particulates may include
A) homo or co polymers of the following monomeric units or salts thereof - acrylic acids, maleic acids, sulfonic acids or phosphonics acid; and/or
B) citrate salts, for example alkali metal citrates, and especially sodium citrate.

Preferably a compound of class A) and a compound of class B) are both present in a water-softening composition.

Additional beneficial compounds in a water-softening composition include one or more of:
(1) ion exchange agents, including alkali metal (preferably sodium) aluminosilicates, either crystalline, amorphous or a mixture of the two;
(2) ion capture agents - agents which prevent metal ions from forming insoluble salts or reacting with surfactants, such as polyphosphate, monomeric polycarbonates, such as citric acid or salts thereof, EDTA, algins, alginates; and
(3) anti-nucleating agents - agents which prevent seed crystal growth, such as polycarbonate polymers, such as polyacrylates, acrylic/maleic copolymers, and acrylic phosphonates, and sulfonates.

If the tablet is for use in laundry washing, it may typically comprise, for example, a bleach, stain remover, water-softener, enzyme or fabric conditioner, in addition to the cleaning composition. The tablet may be designed to release components at different times during the laundry wash. For example, a bleach or fabric conditioner is generally released at the end of a wash, and a water-softener is generally released at the start of a wash. An enzyme may be released at the start or the end of a wash.

If the tablet is for use in dishwashing it may comprise, for example, a water-softener, salt, enzyme, rinse aid, bleach or bleach activator. The tablet may be designed to release the components at different times during the wash cycle. For example, a rinse aid, bleach or bleach activator is generally released at the end of a wash, and a water-softener, salt or enzyme is generally released at the start of a wash.

The components of a cleaning tablet depend on its intended use. Generally, the tablet may contain surface active agents such as an anionic, non-ionic, cationic, amphoteric or zwitterionic surface active agents or mixtures thereof.

Examples of anionic surfactants are straight-chained or branched alkyl sulfates and alkyl polyalkoxylated sulfates, also known as alkyl ether sulfates. Such surfactants may be produced by the reaction of sulfates with higher (e.g.C₈-C₂₀₎ fatty alcohols.

Examples of primary alkyl sulfate surfactants are those of formula:

ROSO₃⁻M⁺

wherein R is a linear C₈-C₂₀ hydrocarbyl group and M is a water-solubilising cation. Preferably R is C₁₀-C₁₆ alkyl, for example C₁₂-C₁₄, and M is alkali metal such as lithium, sodium or potassium.

Examples of secondary alkyl sulfate surfactants are those which have the sulfate moiety on a "backbone" of the molecule, for example those of formula:

CH₂(CH₂)ₙ(CHOSO₃⁻M⁺) (CH₂)ₘCH₃

wherein m and n are independently 2 or more, the sum of m+n typically being 6 to 20, for example 9 to 15, and M is a water-solubilising cation such as lithium, sodium or potassium.

Especially preferred secondary alkyl sulfates are the (2,3) alkyl sulfate surfactants of formulae:

CH₂(CH₂)ₓ(CHOSO₃⁻M⁺) CH₃ and

CH₃(CH₂)ₓ(CHOSO₃⁻M⁺) CH₂CH₃

for the 2-sulfate and 3-sulfate, respectively. In these formulae x is at least 4, for example 6 to 20, preferably 10 to 16. M is cation, such as an alkali metal, for example lithium, sodium or potassium.

Examples of alkoxylated alkyl sulfates are ethoxylated alkyl sulfates of the formula:

RO(C₂H₄O)ₙSO₃⁻M⁺

wherein R is a C₈-C₂₀ alkyl group, preferably C₁₀-C₁₈ such as a C₁₂-C₁₆, n is at least 1, for example from 1 to 20, preferably 1 to 15, especially 1 to 6, and M is a salt-forming cation such as lithium, sodium, potassium, ammonium, alkylammonium or alkanolammonium. These compounds can provide especially desirable fabric cleaning performance benefits when used in combination with alkyl sulfates.

The alkyl sulfates and alkyl ether sulfates will generally be used in the form of mixtures comprising varying alkyl chain lengths and, if present, varying degrees of alkoxylation.

Other anionic surfactants which may be employed are salts of fatty acids, for example C₈-C₁₈ fatty acids, especially the sodium or potassium salts, and alkyl, for example C₈-C₁₈, benzene sulfonates.

Examples of non-ionic surfactants are fatty acid alkoxylates, such as fatty acid ethoxylates, especially those of formula:

R(C₂H₄O)ₙOH

wherein R is a straight or branched C₈-C₁₆ alkyl group, preferably a C₉-C₁₅, for example C₁₀-C₁₄, alkyl group and n is at least 1, for example from 1 to 16, preferably 2 to 12, more preferably 3 to 10.

The alkoxylated fatty alcohol non-ionic surfactant will frequently have a hydrophilic-lipophilic balance (HLB) which ranges from 3 to 17, more preferably from 6 to 15, most preferably from 10 to 15.

Examples of fatty alcohol ethoxylates are those made from alcohols of 12 to 15 carbon atoms and which contain about 7 moles of ethylene oxide. Such materials are commercially marketed under the trademarks NEODOL 25-7 and NEODOL 23-6.5 by Shell Chemical Company. Other useful compounds of this type include NEODOL 1-5, an ethoxylated fatty alcohol averaging 11 carbon atoms in its alkyl chain with about 5 moles of ethylene oxide; NEODOL 23-9, an ethoxylated primary C₁₂-C₁₃ alcohol having about 9 moles of ethylene oxide; and NEODOL 91-10, an ethoxylated C₉-C₁₁ primary alcohol having about 10 moles of ethylene oxide.

Alcohol ethoxylates of this type have also been marketed by Shell Chemical Company under the DOBANOL trademark. DOBANOL 91-5 is an ethoxylated C₉-C₁₁ fatty alcohol with an average of 5 moles ethylene oxide and DOBANOL 25-7 is an ethoxylated C₁₂-C₁₅ fatty alcohol with an average of 7 moles of ethylene oxide per mole of fatty alcohol.

Other examples of suitable ethoxylated alcohol non-ionic surfactants include TERGITOL 15-S-7 and TERGITOL 15-S-9, both of which are linear secondary alcohol ethoxylates available from Union Carbide Corporation. TERGITOL 15-S-7 is a mixed ethoxylated product of a C₁₁-C₁₅ linear secondary alkanol with 7 moles of ethylene oxide and TERGITOL 15-S-9 is the same but with 9 moles of ethylene oxide.

Other suitable alcohol ethoxylated non-ionic surfactants are NEODOL 45-11, which is a similar ethylene oxide condensation products of a fatty alcohol having 14-15 carbon atoms and the number of ethylene oxide groups per mole being about 11. Such products are also available from Shell Chemical Company.

Further non-ionic surfactants are, for example, C₁₀-C₁₈ alkyl polyglycosides, such as C₁₂-C₁₆ alkyl polyglycosides. These are especially useful when high foaming compositions are desired. Further surfactants are polyhydroxy fatty acid amides, such as C₁₀-C₁₈ N-(3-methoxypropyl) glycamides and ethylene oxide-propylene oxide block polymers of the Pluronic type.

Examples of cationic surfactants are those of the quaternary ammonium type.

The total content of surfactants in the tablet is desirably 60 to 95 wt%, especially 75 to 90 wt%. Desirably an anionic surfactant is present in an amount of 50 to 75 wt%, the nonionic surfactant is present in an amount of 5 to 50 wt%, and/or the cationic surfactant is present in an amount of from 0 to 20 wt%, by weight of tablet.

The tablets, particularly when used as laundry washing or dishwashing tablets, may also independently comprise enzymes, such as protease, lipase, amylase, cellulase and peroxidase enzymes. Such enzymes are commercially available and sold, for example, under the registered trade marks ESPERASE, ALCALASE and SAVINASE by Nova Industries A/S and MAXATASE by International Biosynthetics, Inc. Desirably the enzymes are independently present in the tablets in an amount of from 0.5 to 3 wt%, especially 1 to 2 wt%, when added as commercial preparations they are not pure and this represents an equivalent amount of 0.005 to 0.5 wt% of pure enzyme. As mentioned above they can be incorporated after extrusion if wished.

The tablets may, if desired, comprise a thickening agent or gelling agent. Suitable thickeners are polyacrylate polymers such as those sold under the trade mark CARBOPOL, or the trade mark ACUSOL by Rohm and Haas Company. Other suitable thickeners are xanthan gums. The thickener, if present, is generally present in an amount of from 0.2 to 4 wt%, especially 0.5 to 2 wt%.

Tablets used in dishwashing independently usually comprise a detergency builder. The builders counteract the effects of calcium, or other ion, water hardness. Examples of such materials are citrate, succinate, malonate, carboxymethyl succinate, carboxylate, polycarboxylate and polyacetyl carboxylate salts, for example with alkali metal or alkaline earth metal cations, or the corresponding free acids. Specific examples are sodium, potassium and lithium salts of oxydisuccinic acid, mellitic acid, benzene polycarboxylic acids, C₁₀-C₂₂ fatty acids and citric acid. Other examples are organic phosphonate type sequestering agents such as those sold by Monsanto under the trade mark DEQUEST and alkylhydroxy phosphonates. Citrate salts and C₁₂-C₁₈ fatty acid soaps are preferred. Further builders are: phosphates such as sodium, potassium or ammonium salts of mono-, di- or tri-poly or oligo-phosphates; zeolites; silicates, amorphous or structured, such as sodium, potassium or ammonium salts.

Other suitable builders are polymers and copolymers known to have builder properties. For example, such materials include appropriate polyacrylic acid, polymaleic acid, and polyacrylic/polymaleic and copolymers and their salts, such as those sold by BASF under the trade mark SOKALAN. The builder is desirably present in an amount of up to 90 wt%, preferably 15 to 90 wt%, more preferably 15 to 75 wt%, relative to the total weight of the tablet. Further details of suitable components are given in, for example, EP-A-694,059, EP-A-518,720 and WO 99/06522.

The tablets can also optionally comprise one or more additional ingredients. These include conventional cleaning composition components such as further surfactants, bleaches, bleach enhancing agents, builders, suds boosters or suds suppressors, anti-tarnish and anticorrosion agents, organic solvents, co-solvents, phase stabilisers, emulsifying agents, preservatives, soil suspending agents, soil release agents, germicides, pH adjusting agents or buffers, non-builder alkalinity sources, chelating agents, clays such as smectite clays, enzyme stabilizers, anti-limescale agents, colourants, dyes, hydrotropes, dye transfer inhibiting agents, brighteners, and perfumes. If used, such optional ingredients will generally constitute no more than 10 wt%, for example from 1 to 6 wt%, of the total weight of the tablets.

Tablets which comprise an enzyme may optionally contain materials which maintain the stability of the enzyme.

Such enzyme stabilizers include, for example, polyols such as propylene glycol, boric acid and borax. Combinations of these enzyme stabilizers may also be employed. If utilized, the enzyme stabilizers generally constitute from 0.1 to 1 wt% of the tablets.

Preferred dishwashing tablets are adapted to be used in automatic dish washing machines. Due to their specific requirements specialised formulation is required and these are illustrated below.

Amounts of the ingredients can vary within wide ranges, however preferred automatic dishwashing cleaning composition tablets herein (which typically have a 1% aqueous solution pH of above 8, more preferably from 9.5 to 12, most preferably from 9.5 to 10.5) are those wherein there is present: from 5% to 90%, preferably from 5% to 75%, of builder; from 0.1% to 40%, preferably from 0.5% to 30%, of bleaching agent; from 0.1% to 15%, preferably from 0.2% to 10%, of the surfactant system; from 0.0001% to 1%, preferably from 0.001% to 0.05%, of a metal-containing bleach catalyst; and from 0.1% to 40%, preferably from 0.1% to 20% of a water-soluble silicate. Such fully-formulated embodiments typically further comprise from 0.1% to 15% of a polymeric dispersant, from 0.01% to 10% of a chelant, and from 0.00001% to 10% of a detersive enzyme, though further additional or adjunct ingredients may be present.

Non-ionic surfactants useful in ADW (Automatic Dish Washing) tablets of the present invention desirably include surfactant(s) at levels of from 2% to 60% of the composition. In general, bleach-stable surfactants are preferred. Non-ionic surfactants generally are well known, being described in more detail in Kirk Othmer's Encyclopedia of Chemical Technology, 3rd Ed., Vol. 22, pp. 360-379, "Surfactants and Detersive Systems", incorporated by reference herein.

Preferably an ADW tablet comprises at least one non-ionic surfactant. One class of non-ionics are ethoxylated non-ionic surfactants prepared by the reaction of a monohydroxy alkanol or alkylphenol with 6 to 20 carbon atoms with preferably at least 12 moles, particularly preferably at least 16 moles, and still more preferably at least 20 moles of ethylene oxide per mole of alcohol or alkylphenol.

Particularly preferred non-ionic surfactants are formed from a linear chain fatty alcohol with 16-20 carbon atoms and at least 12 moles, particularly preferably at least 16 moles, and still more preferably at least 20 moles, of ethylene oxide, per mole of alcohol.

According to one preferred embodiment the non-ionic surfactant additionally comprises propylene oxide (PO) units in the molecule. Preferably the PO units constitute up to 25% by weight, preferably up to 20% by weight and still more preferably up to 15% by weight of the overall molecular weight of the non-ionic surfactant. Particularly preferred surfactants are ethoxylated mono-hydroxy alkanols or alkylphenols, which additionally comprises polyoxyethylene-polyoxypropylene block copolymer units. The alcohol or alkylphenol portion of such surfactants constitutes more than 30%, preferably more than 50%, more preferably more than 70% by weight of the overall molecular weight of the non-ionic surfactant.

Another class of non-ionic surfactants includes reverse block copolymers of polyoxyethylene and polyoxypropylene and block copolymers of polyoxyethylene and polyoxypropylene initiated with trimethylolpropane.

Another preferred non-ionic surfactant can be described by the formula:

R¹O[CH₂CH(CH₃)O]_{X}[CH₂CH₂O]_{Y}[CH₂CH(OH)R²]

wherein *R¹* represents a linear or branched chain aliphatic hydrocarbon group with 4-18 carbon atoms or mixtures thereof, *R²* represents a linear or branched chain aliphatic hydrocarbon rest with 2-26 carbon atoms or mixtures thereof, *x* has a value between 0.5 and 1.5 and *y* has a value of at least 15.

Another group of preferred nonionic surfactants are the end-capped polyoxyalkylated non-ionics of formula:

R¹O[CH₂CH(R³)O]_{X}[CH₂]ₖCH(OH)[CH₂]ⱼOR²

wherein R¹ and R² represent linear or branched chain, saturated or unsaturated, aliphatic or aromatic hydrocarbon groups with 1-30 carbon atoms, R³ represents a hydrogen atom or a methyl, ethyl, n-propyl, iso-propyl, n-butyl, 2-butyl or 2-methyl-2-butyl group, x has a value between 1 and 30 and, k and j have values between 1 and 12, preferably between 1 and 5. When the value of x is ≥2 each R³ in the formula above can be different. R¹ and R² are preferably linear or branched chain, saturated or unsaturated, aliphatic or aromatic hydrocarbon groups with 6-22 carbon atoms, where groups with 8 to 18 carbon atoms are particularly preferred. For the group R³ H, methyl or ethyl are particularly preferred. Particularly preferred values for x are from 1 and 20, preferably from 6 to 15.

As described above, when x ≥2, each R³ in the formula can be different. For example, when x=3, the group R³ could be chosen to build ethylene oxide (R³=H) or propylene oxide (R³=methyl) units which can be used in every single order for example (PO)(EO)(EO), (EO) (PO) (EO), (EO)(EO)(PO), (EO)(EO)(EO), (PO)(EO)(PO), (PO) (PO) (EO) and (PO) (PO) (PO) . The value 3 for x is only an example and bigger values can be chosen whereby a higher number of variations of (EO) or (PO) units would arise.

Particularly preferred end-capped polyoxyalkylated alcohols of the above formula are those where k=1 and j=1 originating molecules of simplified formula:

R¹O[CH₂CH(R³)O]_{X}CH₂CH(OH)CH₂OR²

The use of mixtures of different non-ionic surfactants is particularly preferred in ADW formulations for example mixtures of alkoxylated alcohols and hydroxy group containing alkoxylated alcohols.

A tablet disintegrant could be present in the tablets, for example a water-swellable cellulosic compound.
Preferably, however, a disintegrant is not present.

In accordance with a ninth aspect of the present invention there is provided a method of washing wares, using a cleaning composition tablet of the eighth aspect. In this method the tablet is preferably immersed for a prolonged period in the wash water e.g. throughout a wash cycle, and is dissolved during that wash cycle.

In accordance with a tenth aspect of the present invention there is provided a method of effecting water softening, using a water-softening tablet of the eighth aspect. In this method the tablet is preferably located in a zone through which water flows into a ware-washing machine, e.g. in a loading drawer. It may be provided to the consumer in a cage. It may be designed to require a plurality of washes in order to dissolve, for example at least three washes, and preferably up to 20 washes, preferably up to 12 washes, and especially up to 8 washes, when exposed to cold water feed.

Preferably the method of the ninth or tenth aspect is one carried out in a ware-washing machine, within which the tablet dissolves, in use. The machine may be a dishwashing machine, or it may be a machine for washing fabrics. Preferably it is an automatic dishwashing or clothes washing machine.

The invention will now be further described, by way of example, with reference to the following example sets.

### Example Set 1

This example set relates to the preparation of detergent tablets for an automatic dishwasher.

### EQUIPMENT

A Clextral BC45 twin screw extruder with a 500 mm barrel was assembled with a small degree of screw overlap and a screw geometry with predominantly forward pitch elements and low shear elements. An end plate has a polypropylene die with a single slot, of size 27mm x 14mm.

About the die slot there was a threaded part into which was screwed a piece of copper pipe, angled to feed the extruded strand gently onto a take-off conveyer.

Liquid PEG 1500 was injected via its own inlet port at the feed end of the barrel using a Watson Marlow 503S peristaltic pump. The PEG was maintained in liquid form by keeping it in a stainless steel tank within a temperature controlled water bath. The amount of PEG in Example Set 1 was 11% w/w of the final composition.

The extrusion pressure was 5.1 MPa. This was measured by a GENTRAN TUFFGAGE GT-90-15M strain gauge device, employing a mechanical diaphragm measuring device. The probe was located in the centre of the extruder barrel 50 mm upstream of the upstream side of the die, in line with the die opening.

### MATERIALS

The formulation of the powder mix (particulates) was as stated in the table below. The mixes were prepared using a planetary mixer and a batch size of 15 kg (mixing time of 15 minutes).

| **Ingredient** | **Parts by weight** |
|---|---|
| Sodium tripolyphosphate | 3 |
| Sodium carbonate | 3 |
| Sodium sulfate | 2 |
| Sodium silicate | 1 |

The lubricant was sucrose oleate (formulated as 40% active, in water). The sucrose oleate was heated to reduce its viscosity, weighed out, then introduced into the planetary mixer. The oleate was added at two levels, 4% and 5% w/w of its aqueous composition (equating to 1.6% w/w and 2% w/w sucrose oleate compound) and blended in well, giving a moist feel to the particulates. This premixing appeared to make the extrusion process much more controllable and to allow throughput to be significantly increased.

### RESULTS

Samples were first produced using a powder that had been pre-lubricated with 5% w/w sucrose oleate composition (i.e. 2% w/w sucrose oleate compound), at throughputs of 66kg/hr and 78kg/hr respectively. The flow of extrudate was extremely steady and yielded good quality products. We can describe these as single strands with smooth surfaces and more granular, but consolidated, cores.

Further samples were produced using a powder premix lubricated by 4% w/w sucrose oleate composition (i.e. 1.6% sucrose oleate compound). The throughput was gradually increased to 144kg/hr. In all cases the extrudate was very smooth and there was no surging through the die. The die head temperature gradually increased from 48 to 60°C over the course of this work and it was felt that the extrudate became smoother as the head became warmer. The operating screw speed was held constant at 75 rpm. Cooling was applied to the feed end of the barrel in order to keep the extrudate temperature as low as possible, consistent with avoidance of blockages.

These examples were allowed to cool in ambient air until they were warm to the touch, but not fully cooled, and then separated into tablets by transverse cuts, produced by a rotating circular saw.

### Example Set 2

This example set relates to the preparation of detergent tablets for an automatic dishwasher.

The same equipment described in Example Set 1 was employed, and the same extrusion pressure. The cleaning composition particulates, and the binder (PEG 1500) were the same as used in Example Set 1, and in the same amounts. The tablets prepared were for use in an automatic dishwasher. The only difference was in some of the lubricants employed.

The lubricants were as follows:
CRILLET 4 - ethoxylated sorbitan monooleate, available from Croda
GLUCATE DO - a glucose dioleate ester, available from D F Anstead
TWEEN 85 - ethoxylated sorbitan trioleate, available from Fisher Chemicals
Sucrose oleate composition - 40% active sucrose oleate compound in water
SPAN 80 - non-ethoxylated sorbitan monooleate, available from Sigma Chemicals.

Sample A was made by mixing sucrose oleate composition with the liquid PEG binder (4% sucrose oleate composition i.e. 1.6% sucrose oleate, and 11% PEG 1500, both by weight/weight of final composition). Extrusion was steady, with a relatively low throughput of 54 kg/hr. The density of this extrusion was measured at 1.49 g/cm³, compared with a density of 1.48 g/cm³ for a commercial product (Registered Trade Mark "FINISH").

Sample B was made by mixing CRILLET 4 with the liquid binder (1.1% CRILLET, 10% PEG, both by weight/weight of final composition). The temperature of the extruder barrel was raised to just under 70°C and maintained using a water bath. Screw speed was 80 rpm and a reasonable extrudate was obtained, albeit a little sticky.

Sample C was similar to Sample B, but the 1.1% w/w CRILLET 4 was replaced by 1% w/w of GLUCATE DO. Steady extrusion was achieved, provided that throughput was not set too high.

Sample D was similar to Sample B, but the 1.1% w/w CRILLET 4 was replaced by 1% w/w of SPAN 80. Throughput was measured at 51 kg/hr, and a good steady flow was achieved. However the material felt a little sticky.

Sample E was similar to Sample B, but the 1.1% w/w CRILLET 4 was replaced by 1% w/w of TWEEN 85. Experiments were run at throughput rates of 54 kg/hr and 75 kg/hr and gave steady extrusion. The strands obtained were considered to be of good quality. The density of the higher-throughput material was measured at 1.59 g/cm³.

These examples were allowed to cool in ambient air until they were warm to the touch, but not fully cooled, and then separated into tablets by transverse cuts, produced by a rotating circular saw.

### Example Set 3

This example set relates to the preparation of water-softener tablets, for use in an automatic washing machine.

### EQUIPMENT

The same equipment as described in Example Set 1 was employed, except that a circular extrusion die, 15 mm in diameter, was used. The pressure at the die head was in the range 4.1-4.8 MPa. The operating temperature was held at 66-70°C along the barrel.

### MATERIALS

The formulation of the components was as stated in the table below. The mixes were prepared using a planetary mixer and a batch size of 15 Kg (mixing time of 10 minutes).

| **Ingredient** | **Parts by weight (%)** | | | |
|---|---|---|---|---|
| | **Ex.3A** | **Ex.3B** | **Ex.3C** | **Ex.3D** |
| Trisodium citrate dihydrate (particulate) | 56.0 | 56.1 | 56.3 | 56.3 |
| Polyacrylate homopolymer (particulate) | 22.5 | 22.5 | 22.6 | 22.6 |
| Sodium sulfate (particulate) | 8.3 | 8.3 | 8.3 | 8.3 |
| PEG 600 Monolaurate (lubricant) | 3.8 | 3.8 | 3.8 | 3.8 |
| Sucrose palmitate (lubricant) | 1.9 | 1.9 | 1.9 | 1.9 |
| PEG 1500 (binder) | 4.6 | 4.3 | 4.1 | 4.1 |
| PEG 6000 (binder) | 3.0 | 3.0 | 3.0 | 3.0 |

The lubricants are believed to be aqueous compositions containing 40% w/w of the active lubricant compounds named.

The PEG 6000 monolaurate is warmed to liquify it, and the sucrose palmitate is blended with it.

As in the case of Example Sets 1 and 2 the lubricants were blended well with the particulates before feeding the resulting premix to the extruder; and the binder was injected as a molten liquid, into the feed end of the extruder barrel.

### RESULTS

A series of runs were carried out, at extrusion rates of 54 Kg/hr, (Ex. 3A tablet density: 1.43 g/cm³), 66 Kg/hr (Ex. 3B tablet density 1.47 g/cm³), 90 Kg/hr (Ex. 3C tablet density 1.44 g/cm³) and 102 Kg/hr (Ex. 3D tablet density 1.48 g/cm³) .

All materials extruded smoothly through the die.

These examples were allowed to cool in ambient air until they were warm to the touch, but not fully cooled, and then separated into tablets by transverse cuts, produced by a rotating circular saw.

### Example Set 4

This example set relates to the preparation of water-softener tablets, for use in an automatic washing machine.

### EQUIPMENT

The extrusion equipment and conditions were as described above for Example Set 3, except that the die head opening was a plastics plate with a slot-like aperture, of size 27 mm by 7 mm, and the operating temperature across the barrel was 64-76°C.

### MATERIALS

The materials were as follows:

| **Ingredient** | **Ex. 4A** | **Ex.4B** |
|---|---|---|
| | **(p/w)** | **(p/w)** |
| Trisodium citrate dihydrate (particulate) | 56.3 | 62.4 |
| Polyacrylate homopolymer (particulate) | 22.6 | 25.0 |
| Sodium sulfate (particulate) | 8.3 | 0 |
| PEG 600 Mono-laurate 40% active (lubricant) | 1.9 | 2.1 |
| Sucrose palmitate 40% active (lubricant) | 1.9 | 2.1 |
| PEG 1500 (binder) | 7.1 | 6.2 |

Tablets were formed as described above with reference to Examples Sets 3 and 1.

Example 4A employed a throughput of 96 Kg/hr. The tablets were of density 1.32 g/cm³. Example 4B employed a throughput of 84 Kg/hr. The tablets were of density 1.2 g/cm³.

The dissolution characteristics of the tablets were assessed using a water bath fitted with a heating element and a temperature probe. Four glass 1 litre beakers sit in the water bath. The device has a mechanical arm which is connected to the four platforms. A tablet rests on each platform. The arm, when activated, "dunks" (i.e. lowers then raises) the platforms, and thus the tablets are in and out of the glass beakers.

The tablets were assessed at three different temperatures. Firstly the beakers were filled with cold tap water (-18°C) and the heater was not used. Secondly the beakers were filled with warm tap water (- 45°C). The heater was on low, so that the temperature fell only to 38°C over 47 minutes. Thirdly the beakers were filled with hot water (- 75°C) and kept at that temperature for 47 minutes.

The results are set out in the table below.

| Example | Dissolution | Dissolution | Dissolution |
|---|---|---|---|
| | at 18°C | at 40°C | at 70°C |
| Ex 4A | 18.2% after 150 minutes | Complete after 47 minutes | Complete after 10 minutes |
| Ex 4B | 22.2% after 150 minutes | Complete after 47 minutes | Complete after 9 minutes |

The slow dissolution rate of the tablets in cold water may be a useful property. Such a tablet (including a bar) may be suitable in effecting water softening over an extended period, in a cold water cleaning environment.

### Example Set 5

This example set also relates to the preparation of water-softening tablets, for use in an automatic ware-washing machine. The tablets had the following formulation.

| **Ingredient** | **Ex. 5** |
|---|---|
| | **(p/w)** |
| Trisodium citrate dihydrate (particulate) | 56.4 |
| Polyacrylate homopolymer (particulate) | 22.6 |
| Sodium sulfate (particulate) | 8.3 |
| PEG 600 Mono-laurate (lubricant) | 3.8 |
| Sucrose palmitate (lubricant) | 1.9 |
| PEG 6000 (binder) | 7.0 |

The extruder barrel and die head temperature were 90°C. In three runs, the throughput was 68, 90 and 110 Kg/hr, and in each case yielded a strand with a very smooth surface, which was separated into tablets by a guillotine-like chopping action. The tablet manufactured at a throughput rate of 90 kg/hr was subjected to cold water dissolution testing as described above in Example Set 4. The results are shown in the following table.

| Time (mins) | Cumulative loss in weight (%) |
|---|---|
| 10 | 4.0 |
| 20 | 5.5 |
| 30 | 6.4 |
| 40 | 8.1 |
| 50 | 9.8 |
| 60 | 10.5 |
| 90 | 12.7 |
| 120 | 14.8 |
| 150 | 17.8 |
| 180 | 18.3 |
| 210 | 20.6 |
| 240 | 21.8 |
| 270 | 23.7 |
| 300 | 25.7 |

## Claims

1. A method of lubricating a particulate material, the method comprising mixing a sucrose ester and/or a sorbitan ester with the particulate material.

2. A method according to claim 1, wherein the ester has 8 to 24 carbon atoms.

3. A method according to claim 1 or 2, wherein the ester moiety is linear.

4. A method according to claim 1, wherein examples of suitable sucrose esters, include sucrose palmitate, sucrose laurate and sucrose oleate.

5. A method according to claim 1, wherein examples of suitable sorbitan esters include sorbitan oleate (e.g. mono-oleate or tri-oleate) and sorbitan laurate.

6. A method according to any one of claims 1 to 5, wherein the preferred particulate material is a cleaning or water-softening composition.
